# EUROPÄISCHE PATENTSCHRIFT

(11) **EP 3 581 528 B1**
(45) Veröffentlichungstag und Bekanntmachung des Hinweises auf die Patenterteilung: **28.02.2024**
(21) Anmeldenummer: 18177951.3
(22) Anmeldetag: 15.06.2018
(51) Int. Cl.: B65G 43/02, G05B 23/02

(54) **VORRICHTUNG UND VERFAHREN ZUM ÜBERWACHEN DES WARTUNGSZUSTANDS EINES GURTFÖRDERERS**
DEVICE AND METHOD FOR MONITORING THE MAINTENANCE STATUS OF A CONVEYOR
DISPOSITIF ET PROCÉDÉ DE SURVEILLANCE DE L'ÉTAT D'ENTRETIEN D'UNE BANDE TRANSPORTEUSE

(43) Veröffentlichungstag der Anmeldung: 18.12.2019
(73) Patentinhaber: BEUMER Group GmbH & Co. KG, 59269 Beckum (DE)
(72) Erfinder: Kirsch, Christopher, 58239 Schwerte (DE); Dr. Werner, Andreas, 44267 Dortmund (DE); Dr. von Schwartz, Adam, 44803 Bochum (DE)
(74) Vertreter: Philipp, Matthias

(56) Entgegenhaltungen:
- WO-A1-2016/019431
- DE-A1-102004 014 084
- US-A1- 2008 133 051
- US-A1- 2015 170 109
- K. Reincke: "Alterung und Beständigkeitsuntersuchungen von Elastomerwerkstoffen", , 31. Oktober 2014 (2014-10-31), Seiten 60-67, XP055534295, Gefunden im Internet: URL:https://www.kgk-rubberpoint.de/wp-cont ent/uploads/migrated/paid_content/artikel/ 3324.pdf [gefunden am 2018-12-13]
- Ulrich Blobner: "Fachwissen Prüfverfahren für Elastomere", , 31. Dezember 2015 (2015-12-31), Seiten 1-38, XP055534309, Gefunden im Internet: URL:https://www.o-ring-prueflabor.de/files /fachwissen-100_-jahre_-shorea-12_2015_1.p df [gefunden am 2018-12-13]

## Beschreibung

Die Erfindung betrifft eine Vorrichtung und ein Verfahren zum Überwachen des Wartungszustands eines Gurtförderers.

Zum Sortieren, Transportieren und/oder Fördern von Gütern kommen häufig gurtbasierte Fördereinrichtungen zum Einsatz. Dabei verläuft ein Fördergurt entlang einer Transportstrecke und wird in einer Transportrichtung angetrieben. Der Fördergurt bildet entweder selbst eine oder mehrere Mitnahmeeinheiten zur Mitnahme des Transportguts aus oder nimmt entsprechende Behälter zur Aufnahme der Transportguts mit. Beispiele solcher Fördereinrichtungen sind Becherwerke, Muldengurtförderer, Schlauch- bzw. Rohrgurtförderer oder Gurtstahlzellenförderer. Derartige Förderanlagen werden für den Transport diverser Materialien eingesetzt, insbesondere wird damit Schüttgut, zum Beispiel Eisenerz, Kohle, Klinker und Ähnliches, transportiert. Aufgrund der hohen Belastungen (Temperatur, Abrieb, Feuchtigkeit, Schmutz, usw.) ist es in regelmäßigen Abständen notwendig, einzelne Komponenten des Gurtförderers auszutauschen, zu warten, zu reinigen oder zu reparieren. Besonders verschleißanfällige Komponenten sind Gurte, Lager, Antriebs- und Umlenktrommeln. Daher sind in regelmäßigen Abständen Wartungsarbeiten vorgesehen.

Dazu sind diverse Überwachungseinrichtungen bekannt, die mit Hilfe von Sensoren oder optoelektrischen Systemen (zum Beispiel Kameras) ein "condition monitoring" oder eine "predictive maintenance" ermöglichen. So wird der Wartungszustand des Gerätes über Wartungszustandsindikatoren abgeschätzt, um rechtzeitig einen neuen Wartungstermin anzusetzen.

Nachteilig bei bekannten Systemen ist z.B., dass entweder zusätzliche Teile wie Sensoren oder Magnete in den Gurt eingebettet werden müssen, oder hauptsächlich Sensoren eingesetzt werden, die die Umgebungsbedingungen (z.B. Temperatur, Feuchtigkeit, usw.) erfassen. Eine zusätzliche Erfassung von Daten bezüglich der Gurtqualität ist bisher nicht vorgesehen. Ferner ermöglichen diese Systeme keine oder nur eine eingeschränkte Weiterleitung von Messdaten an eine übergeordnete Steuerung oder mobile Endgeräte (Tablet, Smartphone) und bieten keine oder nur eingeschränkte Übersichts- und Auswertungsmöglichkeiten in Form von Dashboards, Schaubildern oder Reports und sich daraus ergebende Hinweise zu Wartung oder Austausch von Komponenten.

US 2008/0133051 A1 offenbart ein Fernüberwachungssystem für einen Fördergurt, einschließlich der Erfassung von Gurtzustandsdaten und Betriebseigenschaften. Das genannte Dokument beschreibt ein Verfahren zum Überwachen des Wartungszustands eines Gurtförderers, der einen Gurt aus einem elastomeren Werkstoff aufweist, mittels einer Vorrichtung mit mindestens einem im Bereich eines Gurtförderers angeordneten Sensor zur Erfassung von Gurtzustandsdaten, einer Datenbank zum Speichern von durch den Sensor erfassten Daten, und einer Steuerung, die mit dem mindestens einen Sensor und der Datenbank verbunden oder verbindbar ist und zur Ausführung der folgenden Schritte eingerichtet ist: a) Messen von Gurtzustandsdaten mittels mindestens eines im Bereich des Gurtförderers angeordneten Sensors, in vorgeschriebenen ersten Zeitabständen, wobei die Gurtzustandsdaten als Wartungszustandindikator verwenden werden, b) Speichern der erfassten Daten in einer Datenbank, c) Bestimmen eines nächsten Wartungszeitpunkts anhand des Wartungszustandsindikators, wobei die Daten von einem auf einem ortsfesten oder mobilen Endgerät laufenden Auswertungsprogramm ausgewertet werden, und wobei eine Gurtqualität bestimmt wird, aus der der nächste Wartungszeitpunkt abgeleitet wird.

Die vorliegende Erfindung soll die oben genannten Nachteile zumindest teilweise vermeiden.

Diese Aufgabe wird erfindungsgemäß durch eine Vorrichtung nach Anspruch 1 zum Überwachen des Wartungszustands eines Gurtförderers gelöst, der einen Gurt aus einem elastomeren Werkstoff aufweist, mit mindestens einem im Bereich eines Gurtförderers angeordneten Sensor zur Erfassung mindestens eines Wertes ausgewählt aus Umgebungstemperatur, Luftfeuchtigkeit und Schallpegel, einer Messeinrichtung zum Messen einer Shore-Härte des Gurts, einer Datenbank zum Speichern von durch den Sensor und die Messeinrichtung erfassten Messdaten, und einer Steuerung, die mit dem mindestens einen Sensor, der Messeinrichtung und der Datenbank verbunden oder verbindbar ist und zur Ausführung der folgenden Schritte eingerichtet ist:
a) Messen von Umgebungsbedingungen des Gurts im Bereich des Gurtförderers als den Verschleiß des Gurts bedingende Größen, wobei mindestens ein Wert ausgewählt aus Umgebungstemperatur, Luftfeuchtigkeit und Schallpegel gemessen wird, mittels mindestens eines im Bereich des Gurtförderers angeordneten Sensors, in vorgeschriebenen ersten Zeitabständen,
b) Messen einer Shore-Härte des Gurts, in vorgeschriebenen zweiten Zeitabständen, wobei die Shore-Härte als Wartungszustandsindikator verwendet wird,
c) Speichern von in den Schritten a) und b) erfassten Messdaten in einer Datenbank,
d) Bestimmen eines nächsten Wartungszeitpunkts anhand des Wartungszustandsindikators,
wobei die Messdaten von einem auf einem ortsfesten oder mobilen Endgerät laufenden Auswertungsprogramm ausgewertet werden, wobei ein funktionaler Zusammenhang zwischen den in a) von dem mindestens einen Sensor erfassten Werten und der in b) gemessenen Shore-Härte als Wartungszustandsindikator hergestellt wird und eine Gurtqualität bestimmt wird, aus der der nächste Wartungszeitpunkt abgeleitet wird.

Die Aufgabe wird weiterhin gelöst durch ein Verfahren nach Anspruch 2 zum Überwachen des Wartungszustands eines Gurtförderers, der einen Gurt aus einem elastomeren Werkstoff aufweist, insbesondere unter Verwendung einer erfindungsgemäßen Vorrichtung, umfassend die folgenden Schritte:
a) Messen von Umgebungsbedingungen des Gurts im Bereich des Gurtförderers als den Verschleiß des Gurts bedingende Größen, wobei mindestens ein Wert ausgewählt aus Umgebungstemperatur, Luftfeuchtigkeit und Schallpegel gemessen wird, mittels mindestens eines im Bereich des Gurtförderers angeordneten Sensors, in vorgeschriebenen ersten Zeitabständen,
b) Messen einer Shore-Härte des Gurts, in vorgeschriebenen zweiten Zeitabständen, als Wartungszustandsindikator,
c) Speichern von in den Schritten a) und b) erfassten Messdaten in einer Datenbank,
d) Bestimmen eines nächsten Wartungszeitpunkts anhand des Wartungszustandsindikators, wobei die Messdaten von einem auf einem ortsfesten oder mobilen Endgerät laufenden Auswertungsprogramm ausgewertet werden, wobei ein funktionaler Zusammenhang zwischen den in a) von dem mindestens einen Sensor erfassten Werten und der in b) gemessenen Shore-Härte als Wartungszustandsindikator hergestellt wird und eine Gurtqualität bestimmt wird, aus der der nächste Wartungszeitpunkt abgeleitet wird.

Die Vorrichtung umfasst ein mit der Datenbank und/oder Steuerung verbundenes oder verbindbares Endgerät.

Bei Vorrichtung und Verfahren kann als weiterer Schritt vorgesehen sein: d) Anzeigen der Messdaten auf dem mit der Datenbank verbundenen oder verbindbaren Endgerät.

Bei der gemessenen Shore-Härte des Gurts kann es sich um einen oder auch mehrere von zu messenden Shore-Härtegraden handeln, wobei man gemäß DIN-Normung zwischen Shore A, C und D unterscheidet. Daneben kommt nach der neueren Norm DIN ISO 7619-1 noch Shore AO und AM in Betracht. Je nach Material des Gurts kann einer dieser Shore-Härtewerte oder auch mehrere erfasst und ggf. kombiniert werden.

Es kann vorgesehen sein, dass die Shore-Härte mit einer Messeinrichtung manuell bei Stillstand des Gurtförderers bestimmt wird. Es besteht die Möglichkeit, dass die Shore-Härte automatisch bei Stillstand des Gurtförderers oder mit einer mit dem Gurt oder mit einer Gurttrommel, Antriebs- oder Umlenktrommel, mitbewegbaren Messeinrichtung während des Betriebs des Gurtförderers bestimmt wird. Die Messung erfolgt bevorzugt auf einer Gurtoberseite, die der Aufnahme des zu transportierenden Materials dient, und/oder an einer gegenüberliegenden Unterseite des Gurts. Wenn es sich bei dem Gurtförderer um ein Becherwerk handelt, kann die Shore-Härte an einer beliebigen Stelle des Gurts gemessen werden. Zu jedem gegebenen Messzeitpunkt können mehrere Messungen an unterschiedlichen Stellen des Gurts vorgenommen werden.

Bei der Messung von Umgebungsbedingungen des Gurts im Bereich des Gurtförderers, d.h. mehr oder weniger in unmittelbarer Nähe des Gurts, wird mindestens ein Umgebungsparameter bestimmt, wie Umgebungstemperatur, Luftfeuchtigkeit in der Umgebung des Gurts, und/oder Schallpegel, wobei mindestens ein im Bereich des Gurtförderers oder am Gurtförderer selbst angebrachter Sensor verwendet wird. Die Messung oder die Messungen erfolgen in vorgeschriebenen Zeitabständen, bevorzugt in gleichen Zeitabständen rund um die Uhr. Die Zeitabstände können zwischen 0,1 Sekunden und einer Stunde liegen, bevorzugt zwischen einer Sekunde und 60 Sekunden. Die zweiten Zeitabstände für die Messung der Shore-Härte können andere sein als die ersten Zeitabstände für die Messung der Umgebungsbedingungen, und können insbesondere länger sein, bspw. im Bereich von einer Stunde und zehn Tagen, bevorzugt im Bereich von einer Stunde und 48 Stunden, besonders zweckmäßigerweise 24 Stunden.

Es kann vorgesehen sein, dass in Schritt a) zusätzlich durch einen Beschleunigungssensor Beschleunigungsdaten des Gurtförderers und/oder des Gurts und/oder von Bechern (bei einem Becherwerk) erfasst werden. Weiterhin können zusätzlich durch einen Vibrationssensor Vibrationsdaten des Gurtförderers und/oder des Gurts und/oder von Bechern (bei einem Becherwerk) erfasst werden. Es kann vorgesehen sein, dass zusätzlich Laufzeitdaten des Gurtförderers und/oder des Gurts erfasst werden, und dass zusätzlich durch eine Kamera Foto- oder Videodaten des Gurtförderers und/oder des Gurts erfasst werden. Es kann zweckmäßig sein, in den vorgeschriebenen Zeitabständen von Schritt a) und/oder von Schritt b) ein Foto des Gurts zu erfassen. Vorteilhaft ist es, wenn eine fotografisch erfasste Oberfläche des Gurts vor der Aufnahme gereinigt wird, bspw. mittels einer bezüglich der Laufrichtung des Gurts unmittelbar stromauf vor der Kamera angeordneten Reinigungseinrichtung. In Schritt a) können zusätzlich Messwerte des Stromverbrauchs und/oder eines Antriebsmoments eines Antriebsmotors des Gurtförderers erfasst werden. Dafür kann eine Messeinrichtung für einen Antriebsstrom, eine Antriebsleistung oder ein Antriebsmoment vorgesehen sein, die mit der Steuerung verbunden oder verbindbar ist. Weiterhin können in Schritt a) flüchtige, aus dem Gurt entwichene Bestandteile wie bspw. Weichmacher erfasst und identifiziert werden, um Rückschlüsse auf den Zustand des Gurts zu erhalten. Hierfür kann ein Stoffsensor vorgesehen sein, der zur Erfassung vorgegebener Stoffe oder Stoffklassen angepasst sein kann, etwa Weichmacher, und der mit der Steuerung verbunden oder verbindbar ist.

Bevorzugt ist vorgesehen, dass in Schritt c) die Messdaten in einem lokalen, im Bereich des Gurtförderers angeordneten Speicher gespeichert werden, wobei der Speicher die Datenbank umfassen kann. Hierbei kann vorgesehen sein, dass die Messdaten aus Schritt b) manuell oder automatisch in dem Speicher gespeichert werden.

Alternativ kann vorgesehen sein, dass in Schritt c) die Messdaten, insbesondere mittels drahtloser Kommunikation in einem entfernt von dem Gurtförderer angeordneten Speicher gespeichert werden, der eine Datenbank umfassen kann. Die Daten können über ein Intra- oder Internet übermittelt werden.

Bevorzugt ist weiter vorgesehen, dass die Messdaten in Schritt d) auf dem ortsfesten oder mobilen Endgerät angezeigt werden.

Die Messdaten werden erfindungsgemäß von einem auf dem Endgerät laufenden Auswertungsprogramm ausgewertet, wobei ein funktionaler Zusammenhang zwischen den in Schritt a) von dem mindestens einen Sensor erfassten Werten und der in Schritt b) gemessenen Shore-Härte hergestellt wird und eine Gurtqualität bestimmt wird, aus der ein nächster Wartungszeitpunkt abgeleitet wird. Auf dem Endgerät kann eine Anwendung oder "App" installiert sein, die das Auswertungsprogramm umfasst bzw. auf der das Auswertungsprogramm abläuft. Ein Mitarbeiter kann über die App z.B. auf einem Smartphone, Tablet oder mittels eines Wearable die gespeicherten Daten aufrufen, Fotos aufrufen oder auch Fotos oder Videos aufnehmen lassen. Weiterhin besteht die Möglichkeit, in Schritt b) die Messdaten mittels der Anwendung manuell einzugeben.

Die Vorrichtung kann einen Gurtförderer und/oder einen Gurt eines Gurtförderers umfassen.

Es kann vorgesehen sein, dass der Steuerung ausgewählte oder sämtliche erfasste Messdaten zur Verfügung gestellt werden.

Der Gurt kann Verstärkungen in Form von eingebetteten Zugträgern oder Seilen aufweisen. Im Falle eines Becherwerks ist der oder sind die Sensoren zur Erfassung von Temperatur und/oder Luftfeuchtigkeit innerhalb des Becherwerks angebracht. Ein Vibrationssensor sitzt bevorzugt an oder im Bereich einer Außenwand des Becherwerks.

Durch das Auswertungsprogramm oder Analysetool, welches dem zuvor genannten Endgerät entspricht, werden Analyseergebnisse in Form eines Zusammenhangs zwischen den Umgebungsbedingungen und Wartungszuständen bereitgestellt.

Ein Vorteil des Verfahrens besteht darin, dass nicht nur ein Wartungszustand (kontextlos) ermittelt wird, sondern eine Verbindung zu weiteren Größen hergestellt wird, die den Verschleiß bedingen. So können weiterer Verschleiß und folglich auch weitere Wartungsintervalle oder Wartungstermine besser vorausgesagt werden. Über die Ausgabe der Daten wird Mitarbeitern ein schneller und einfacher Zugang zu den ermittelten Daten und dem Zustand des Gurtförderers ermöglicht.

In einem weiteren Schritt kann ein nächstes Wartungsintervall mittels des Analysetools abgeschätzt werden. Dies bietet den Vorteil, dass die Wartungsintervalle objektiv, anhand wissenschaftlicher bzw. technischer Erkenntnisse ermittelt werden.

Je nachdem welche Arten des Verschleißes hauptsächlich auftreten und welche Art von Gurtförderer überwacht wird, sind unterschiedliche Umgebungsbedingungen ausschlaggebend für die Verschleißgeschwindigkeit. Entsprechend können die je nach Anwendungsfall relevanten Umgebungsbedingungen ermittelt werden.

Die Überwachung des Wartungszustandes geschieht über Wartungszustandsindikatoren, wobei erfindungsgemäß die Shore-Härte als Wartungszustandsindikator verwendet wird.

Optische Messinstrumente zum Ermitteln von Wartungszustandsindikatoren bieten den Vorteil, dass die aufgenommenen Bilder sehr einfach manuell von Mitarbeitern als auch automatisch ausgewertet werden können. Außerdem ermöglichen sie eine Überprüfung des gesamten Gurtes und können wie Kraftmesser für eine kontinuierliche Auswertung genutzt werden. Härteprüfungen bieten den Vorteil, dass mit ihnen auch nicht sichtbare strukturelle Defizite ermittelt werden können und sie auch bei Verschmutzungen (z.B. durch Kohlestaub) eingesetzt werden können. Dabei bietet das erfindungsgemäße Verfahren den Vorteil, dass sowohl manuell als auch automatisch gemessene Härtewerte einfach in den Analyseprozess eingepflegt werden können.

Aus den aufgezeichneten Umgebungsbedingungen und den gemessenen Wartungszustandsindikatoren kann mittels des Analysetools ein Modell erzeugt werden. Ein Model bietet den Vorteil, dass es sich sowohl für die Vorhersage nutzen lässt, als auch ein gutes Mittel bildet, um ermittelte Zusammenhänge wissenschaftlich und anschaulich darzustellen.

In einer bevorzugten Ausführungsform ist das Analysetool örtlich von dem Gurtförderer getrennt angeordnet. Die örtliche Trennung ermöglicht es, dass die Analyse nicht am Ort der Anlage durchgeführt werden muss.

Dabei kann das Analysetool die Umgebungsbedingungen und Wartungszustandsindikatoren mehrerer Gurtförderer auswerten. Das Analysetool kann zum Beispiel bei einem Hersteller des Gurtförderers oder einem Forschungsinstitut bereitgestellt werden. Die Analyse der Daten mehrerer Gurtförderer (auch von unterschiedlichen Betreibern) in einem Analysetool ermöglicht es, größere Datenmengen zu analysieren und somit schneller verlässliche Ergebnisse zu erzeugen.

Außerdem ermöglicht es den Entwicklern/Herstellern des Gurtförderers einen einfachen Zugang zu den Daten, einen guten Einblick in Probleme bei Betreibern und so einen verbesserten Service.

Bevorzugt sind die gemessenen Daten und/oder Analyseergebnisse auf einem Anzeigegerät abrufbar. Dabei kann das Anzeigegerät ein mobiles Anzeigegerät sein oder an einem festen Standort, bspw.am Standort des Gurtförderers, positioniert sein. Ferner können manuell gemessene Daten über das Anzeigegerät an das Analysetool übermittelbar sein. Über ein Anzeigegerät, das mobil verfügbar ist oder dem Betreiber vor Ort zur Verfügung steht, können dem Betreiber oder Servicepersonal vor Ort wichtige Daten zugänglich gemacht werden. Dies können Tabellen oder Diagramme der ermittelten Messergebnisse, Auswertungen, ermittelte Zusammenhänge, Schaubilder, Modelle, aufgenommen Bilder, Wartungsanweisungen, Alarmhinweise oder Ähnliches sein. Außerdem ist es möglich, über ein Anzeigegerät manuell ermittelte Daten an das Analysetool zu schicken. Somit ist es möglich, auch dezentral, manuell ermittelte Daten schnell für ein zentrales Analysetool verfügbar zu machen.

Anhand der ermittelten Verknüpfung oder des Modells und anhand der an dem betreffenden Gurtförderer gemessenen Umgebungsbedingungen und des Wartungszustandsindikators kann ein nächster Wartungstermin bestimmt werden. Daraufhin kann in einem vorbestimmten Zeitabstand zum nächsten Wartungstermin eine Benachrichtigung an einen Mitarbeiter übermittelt werden.

Das Analysetool ist zum Verknüpfen der gemessenen Umgebungsbedingungen mit den gemessenen Wartungszuständen oder Wartungszustandsindikatoren ausgelegt.

Das Analysetool umfasst einen Algorithmus, das Auswertungsprogramm, der ausgelegt ist, um Umgebungsbedingungen und Wartungszustände/Wartungszustandsindikatoren miteinander zu verknüpfen. So kann eine Vorhersagegenauigkeit von Wartungsintervallen/-terminen anhand der gemessenen Umgebungsbedingungen und/oder Wartungszustandsindikatoren optimiert werden.

Grundsätzlich sind verschiedene Ausführungsformen der Erfindung denkbar. So können unterschiedliche Automatisierungsgrade erreicht werden und unterschiedlich dichte Überwachungen realisiert werden. Wie genau/dicht eine Überwachung ist und mit welchem Automatisierungsgrad sie umgesetzt wird, beeinflusst maßgeblich die Kosten der Anlage. In einer stark automatisierten Ausführungsform können sämtliche Sensoren drahtlos mit einer App des Anzeigegerätes kommunizieren. Die App kann die Daten an einen Server weiterleiten, der diese speichert und auswertet.

Dazu ist mindestens ein Sensor an der Gurtförderanlage angeordnet und erfasst Umgebungsbedingungen wie zum Beispiel Temperatur oder die Luftfeuchtigkeit. Der oder die Sensor(en) kann (können) zur Datenübertragung berührungslos mit einer Wartungs-App verbunden sein. Dies kann zum Beispiel über Bluetooth oder WLAN geschehen. Bei drahtloser Datenübertragung sind aufgrund der normalerweise anfallenden Distanzen zwischen dem Anzeigegerät (mit Zugriff auf die Wartungsapp) und dem Sensor Funkverbindungen im Bereich des Wireless Personal Area Network (WPAN) sinnvoll.

Über das Anzeigegerät und die darauf befindliche App sind die gespeicherten Sensordaten für Mitarbeiter abrufbar. Das Anzeigegerät ist bevorzugt ein Tablet, ein Smartphone oder eine andere tragbare Benutzerschnittstelle. Bevorzugt ist das Anzeigegerät also eine Benutzerschnittstelle, die in zwei Richtungen funktioniert und sowohl die Eingabe von Daten durch einen Nutzer/Mitarbeiter erlaubt und weiterleitet als auch Ergebnisse und Daten der Sensoren und Analysen empfängt und für den Nutzer/Mitarbeiter sichtbar macht.

Über die App bzw. das Anzeigegerät kann eine Benachrichtigung an den Mitarbeiter versandt werden, um ihn über einen anstehenden Wartungstermin zu informieren. Außerdem können Wartungsintervalle, Diagramme, Tabellen, Modelle, Zeitpläne, Berichte, Schaubilder, Aufnahmen oder Ähnliches für den Nutzer/Mitarbeiter sichtbar gemacht werden. Einfache Analysen und Rechnungen mit kleinen Datenmengen können dabei direkt auf dem Anzeigegerät vorgenommen werden. Zur Analyse und Bearbeitung größerer Datenmengen, die mehr Rechenleistung benötigen, werden die Daten an ein Analysetool verschickt. In der Regel ist das Analysetool ein Rechner der Herstellerfirma, es kann aber auch ein ausgelagerter Server oder der Server eines externen Dienstleisters sein. Die Ergebnisse der Analysen sind bevorzugt wieder über das Anzeigegerät/die App abrufbar. Die App kann auch als sogenannte "Webapp" ausgeführt werden. Die App/Anwendung ist also nicht auf dem Anzeigegerät installiert und wird nicht dort ausgeführt, sondern bevorzugt auf dem genannten Analysetool/Server. Dies kann zum Beispiel über ein http-Protokoll erfolgen.

Es ist außerdem denkbar, dass durch einen Mitarbeiter Fotos von bestimmten Stellen des Gurtes gemacht werden (an bestimmten Belastungsstellen, an Stellen mit Schäden oder Rissen oder an Gurtverbindungsstellen) und diese über die App dem Analysetool zur Verfügung gestellt werden können. Wie bereits beschrieben, ist die Shore-Härte der erfindungsgemäße

Wartungszustandsindikator. Die Shore-Härte wird über ein festgelegtes Verfahren ermittelt, dazu muss eine Härtemessnadel in den Gurt eindringen. Es ist denkbar, dieses Verfahren automatisiert durchzuführen, in den meisten Fällen wird die Messung der Shore-Härte jedoch heute manuell ausgeführt. Das dazu verwendete Messinstrument kann die gemessenen Daten entweder ebenfalls kabellos oder per Kabel an die App weiterleiten oder ein Mitarbeiter kann die Daten manuell in die App eingeben. Die App kann auch weitere Informationen bereitstellen oder aufnehmen, wie z.B. abgeschlossene Wartungsarbeiten, verwendete Materialien, Kunden, Standorte, Namen, Mailadressen oder Telefonnummern. Auch diese Daten können von der App an den Server/das Analysetool weitergeleitet werden und somit weltweit abrufbar gemacht werden. Das Analysetool kann eine Software oder einen Algorithmus zum Berechnen der Gurtqualität oder des Wartungszustands des Gurtes aus den Wartungsindikatoren nutzen. Außerdem kann mittels des Algorithmus ein funktionaler Zusammenhang zwischen den gemessenen Umgebungsbedingungen und den gemessenen Wartungszustandsindikatoren hergestellt werden. Um die durchgeführten Analysen auf eine breitere Datengrundlage zu stellen, ist es möglich die Daten verschiedener Gurtförderanlagen in einem Analysetool zu analysieren (unabhängig davon, von welchem Betreiber sie genutzt werden). So lassen sich präzisere und genauere Modelle zur Vorhersage von Wartungsterminen und Wartungsintervallen erstellen. Der nächste Wartungstermin bzw. Wartungsintervall kann mittels der Wartungsapp dem Kunden oder einem Serviceteam zur Verfügung gestellt werden.

Weiterhin ist es möglich, dass die App/das Anzeigegerät oder der Server/das Analysetool mit einer Steuerung der Förderanlage verbunden ist. Beispielsweise können über das Analysetool möglichst verschleißarme Betriebszustände ermittelt werden, so dass die Steuerung die Förderanlage in einem möglichst verschleißarmen Betrieb betreiben kann. Auch können Grenzwerte für die Umgebungsbedingungen festgelegt werden, deren Über- oder Unterschreiten zu einem Abschalten der Förderanlage führen kann oder ein Warnsignal oder eine Warnmeldung auslösen kann. In einer weniger aufwendigen Ausführungsform werden die von den Sensoren ermittelten Daten auf einen lokalen Speicher, z.B SD-Karte, gespeichert, und anschließend durch Entnahme des Speicher und Auslesen bzw. Übertragen der Daten an die Datenbank bzw. an ein Analysetool ausgewertet.
- Fig. 1: erläutert eine erste Ausführungsform des erfindungsgemäßen Verfahrens und eine entsprechende Überwachungsvorrichtung; und
- Fig. 2: erläutert eine zweite Ausführungsform des erfindungsgemäßen Verfahrens und eine entsprechende Überwachungsvorrichtung.

Die Erfindung wird durch die unabhängigen Ansprüche definiert. Bevorzugte Ausführungsformen der Erfindung sind in den abhängigen Ansprüchen angegeben.

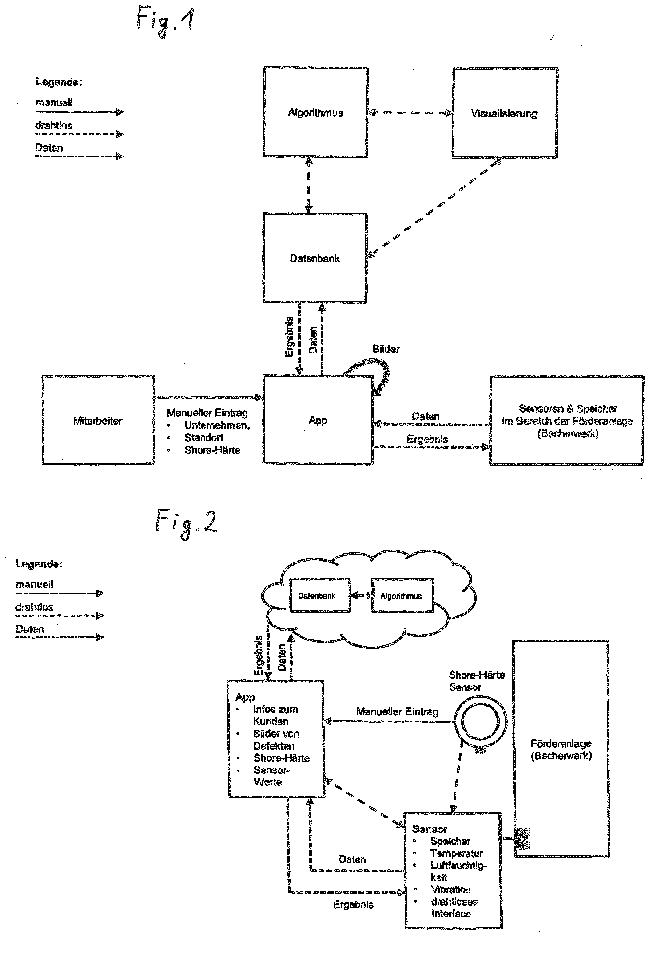

Gemäß Fig. 1 sind Sensoren an einer Gurtförderanlage vorgesehen, die über einen oder mehrere lokale Speicher verfügen. Die Sensoren messen Umgebungsbedingungen wie z.B. die Temperatur, die Luftfeuchtigkeit, Erschütterungen, Verschmutzung oder Ähnliches. Weiterhin wird die Qualität des Fördergurtes bestimmt. Dazu dient ein Härtemessgerät zur Messung der Shore-Härte. Zusätzlich können optische Messgeräte (z.B. Kameras) oder Kraft-, Spannungs- oder Dehnungsmessgeräte (z.B. zur Messung der Spannung oder Dehnung des Fördergurtes) genutzt werden. Als Speicher können z.B. SD-Karten oder mobile Festplatten verwendet werden. Die Speicher können den Sensoren entnehmbar sein und über eine Leseschnittstelle mit einem Anzeigegerät verbindbar sein. Über das Anzeigegerät sind die Speicher auslesbar. So können Daten von dem Speicher an das Anzeigegerät übermittelt werden. Alternativ können die Daten auch über eine drahtlose Verbindung vom Speicher an das Anzeigegerät gesendet werden. Das Anzeigegerät kann z.B. ein Tablet, ein Smartphone, ein Laptop oder eine andere tragbare Benutzerschnittstelle sein. Über das Anzeigegerät kann ein Mitarbeiter auch weitere manuelle Eintragungen vornehmen. Dies können zum Beispiel aufgenommene Fotos, Messwerte von Sensoren (z.B. die Shore-Härte), der Standort, Informationen zur betreffenden Anlage, das Unternehmen, Namen, vorgenommene Wartungsarbeiten oder Ähnliches sein.

Das Anzeigegerät verfügt entweder selbst über eine App/Anwendung oder greift webbasiert auf eine App/Anwendung zu. Die App übermittelt die durch das Anzeigegerät empfangenen Daten an eine Datenbank, in der sie gespeichert werden. Ein vorgegebener Algorithmus kann auf die Daten der Datenbank zugreifen und diese verarbeiten. Anschließend können entstehende Analyseergebnisse an die Datenbank übermittelt werden. Die App kann auf die Datenbank zugreifen und die erzeugten Analyseergebnisse abrufen. Von der App oder der Datenbank kann eine Steuerung des Gurtförderers mit den Analyseergebnissen gespeist werden. Dies kann über die lokalen Speicher der Sensoren oder über eine drahtlose Verbindung geschehen. Die Analyseergebnisse können z.B. Visualisierungen, Verknüpfungen, Modelle, Grenzwerte oder Ähnliches sein.

Figur 2 erläutert eine stärker automatisierte Ausführungsform eines erfindungsgemäßen Verfahrens und einer entsprechenden Überwachungsvorrichtung. Im dargestellten Beispiel ist ein Sensor an einem Gurtförderer positioniert. Der Sensor kann einen Speicher, einen Temperatursensor, einen Luftfeuchtigkeitssensor, einen Vibrationssensor und ein drahtloses Interface umfassen. In diesem Fall dient der Speicher als Puffer, so dass das drahtlose Interface die aufgenommenen Daten an eine Datenbank und/oder an ein Anzeigegerät versenden kann. Weiterhin umfasst die Überwachungsvorrichtung eine Messeinrichtung für die Shore-Härte. Die Shore-Härte wird ebenfalls auf einem Pufferspeicher zwischengespeichert und dann drahtlos an die Datenbank und/oder an das Anzeigegerät übermittelt. Alternativ können die gemessenen Werte der Shore-Härte manuell eingegeben werden. Wie oben bereits beschrieben, verfügt das Anzeigegerät entweder über eine App oder greift webbasiert auf eine App zu, um mit einem Server/Analysetool in Verbindung zu treten und die auf dem Server/Analysetool befindliche Datenbank und den Algorithmus zu nutzen. Die Ergebnisse der Auswertung durch das Analysetool sind mittels der App abrufbar und können der Förderanlage drahtlos übermittelt werden. So kann eine selbstlernende Steuerung der Förderanlage implementiert werden. Außerdem ist es Wartungs- und Servicemitarbeitern einfach möglich vor Ort, d.h. im direkten örtlichen Umfeld der Anlage, alle Informationen über die Förderanlage, Wartungsintervalle, Umgebungsbedingungen, die Historie der Förderanlage, den Betreiber der Förderanlage und Ähnliches in Erfahrung zu bringen.

## Patentansprüche

1. Vorrichtung zum Überwachen des Wartungszustands eines Gurtförderers, der einen Gurt aus einem elastomeren Werkstoff aufweist, mit mindestens einem im Bereich eines Gurtförderers angeordneten Sensor zur Erfassung mindestens eines Wertes ausgewählt aus Umgebungstemperatur, Luftfeuchtigkeit und Schallpegel, einer Messeinrichtung zum Messen einer Shore-Härte des Gurts, einer Datenbank zum Speichern von durch den Sensor und die Messeinrichtung erfassten Messdaten, und einer Steuerung, die mit dem mindestens einen Sensor, der Messeinrichtung und der Datenbank verbunden oder verbindbar ist und zur Ausführung der folgenden Schritte eingerichtet ist:
a) Messen von Umgebungsbedingungen des Gurts im Bereich des Gurtförderers als den Verschleiß des Gurts bedingende Größen, wobei mindestens ein Wert ausgewählt aus Umgebungstemperatur, Luftfeuchtigkeit und Schallpegel gemessen wird, mittels mindestens eines im Bereich des Gurtförderers angeordneten Sensors, in vorgeschriebenen ersten Zeitabständen,
b) Messen einer Shore-Härte des Gurts, in vorgeschriebenen zweiten Zeitabständen, wobei die Shore-Härte als Wartungszustandsindikator verwendet wird,
c) Speichern von in den Schritten a) und b) erfassten Messdaten in einer Datenbank,
d) Bestimmen eines nächsten Wartungszeitpunkts anhand des Wartungszustandsindikators,
wobei die Messdaten von einem auf einem ortsfesten oder mobilen Endgerät der Vorrichtung laufenden Auswertungsprogramm ausgewertet werden, wobei ein funktionaler Zusammenhang zwischen den in a) von dem mindestens einen Sensor erfassten Werten und der in b) gemessenen Shore-Härte als Wartungszustandsindikator hergestellt wird und eine Gurtqualität bestimmt wird, aus der der nächste Wartungszeitpunkt abgeleitet wird.

2. Verfahren zum Überwachen des Wartungszustands eines Gurtförderers, der einen Gurt aus einem elastomeren Werkstoff aufweist, umfassend die folgenden Schritte:
a) Messen von Umgebungsbedingungen des Gurts im Bereich des Gurtförderers als den Verschleiß des Gurts bedingende Größen, wobei mindestens ein Wert ausgewählt aus Umgebungstemperatur, Luftfeuchtigkeit und Schallpegel gemessen wird, mittels mindestens eines im Bereich des Gurtförderers angeordneten Sensors, in vorgeschriebenen ersten Zeitabständen,
b) Messen einer Shore-Härte des Gurts, in vorgeschriebenen zweiten Zeitabständen, als Wartungszustandsindikator,
c) Speichern von in den Schritten a) und b) erfassten Messdaten in einer Datenbank,
d) Bestimmen eines nächsten Wartungszeitpunkts anhand des Wartungszustandsindikators, wobei die Messdaten von einem auf einem ortsfesten oder mobilen Endgerät laufenden Auswertungsprogramm ausgewertet werden,
wobei ein funktionaler Zusammenhang zwischen den in a) von dem mindestens einen Sensor erfassten Werten und der in b) gemessenen Shore-Härte als Wartungszustandsindikator hergestellt wird und eine Gurtqualität bestimmt wird, aus der der nächste Wartungszeitpunkt abgeleitet wird.

3. Verfahren nach Anspruch 2, **dadurch gekennzeichnet, dass** die Shore-Härte manuell bei Stillstand des Gurtförderers bestimmt wird.

4. Verfahren nach Anspruch 2, **dadurch gekennzeichnet, dass** die Shore-Härte automatisch bei Stillstand des Gurtförderers bestimmt wird oder mittels einer mit dem Gurt oder einer Antriebs- oder Umlenktrommel mitbewegbaren Messeinrichtung während des Betriebs des Gurtförderers bestimmt wird.

5. Verfahren nach einem der Ansprüche 2 bis 4, **dadurch gekennzeichnet, dass** im Schritt a) zusätzlich durch einen Beschleunigungssensor Beschleunigungsdaten des Gurtförderers erfasst werden.

6. Verfahren nach einem der Ansprüche 2 bis 5, **dadurch gekennzeichnet, dass** in Schritt a) zusätzlich durch einen Vibrationssensor Vibrationsdaten des Gurtförderers erfasst werden.

7. Verfahren nach einem der Ansprüche 2 bis 6, **dadurch gekennzeichnet, dass** in Schritt a) zusätzlich Laufzeitdaten des Gurtförderers und/oder des Gurts erfasst werden.

8. Verfahren nach einem der Ansprüche 2 bis 7, **dadurch gekennzeichnet, dass** in Schritt a) zusätzlich durch eine Kamera Foto- oder Videodaten des Gurts und/oder des Gurtförderers erfasst werden.

9. Verfahren nach einem der Ansprüche 2 bis 8, **dadurch gekennzeichnet, dass** in Schritt b) die Shore A, C, AO und/oder AM-Härte des Gurts erfasst wird.

10. Verfahren nach einem der Ansprüche 2 bis 9, **dadurch gekennzeichnet, dass** in Schritt c) die Messdaten in einem lokalen, im Bereich des Gurtförderers angeordneten Speicher gespeichert werden, der die Datenbank umfassen kann.

11. Verfahren nach Anspruch 10, **dadurch gekennzeichnet, dass** in Schritt c) die Messdaten manuell oder automatisch in dem Speicher gespeichert werden.

12. Verfahren nach einem der Ansprüche 2 bis 9, **dadurch gekennzeichnet, dass** in Schritt c) die Messdaten mittels drahtloser Kommunikation in einem entfernt von dem Gurtförderer angeordneten Speicher gespeichert werden, der die Datenbank umfassen kann.

13. Verfahren nach einem der Ansprüche 2 bis 12, **dadurch gekennzeichnet, dass** in Schritt d) die Messdaten auf dem Endgerät angezeigt werden.

14. Verfahren nach einem der Ansprüche 2-13, **dadurch gekennzeichnet, dass** auf dem Endgerät eine Anwendung installiert ist, die das Auswertungsprogramm umfasst.

## Claims

1. Device for monitoring the maintenance status of a belt conveyor that has a belt made of an elastomer material, with at least one sensor arranged in the area of a belt conveyor, for recording at least one value selected from ambient temperature, air humidity and noise level, a measurement device for measuring a Shore hardness of the belt, a database for storing measurement data recorded by the sensor and by the measurement device, and a control unit which is or can be connected to the at least one sensor, to the measurement device and to the database and which is set up to execute the following steps:
a) measurement of the ambient conditions of the belt in the area of the belt conveyor as variables that determine the wear on the belt, with at least one value selected from ambient temperature, air humidity and noise level being measured by means of at least one sensor arranged in the area of the belt conveyor, at prescribed first time intervals,
b) measurement of a Shore hardness of the belt at prescribed second time intervals, with the Shore hardness being used as an indicator of maintenance status,
c) storage of measurement data recorded in steps a) and b) in a database,
d) determination of a next maintenance time point on the basis of the maintenance status indicator,
with the measurement data being evaluated by an evaluation program running on a static or mobile terminal of the device, wherein a functional relationship between the values recorded in a) by the at least one sensor and the Shore hardness measured in b) is established as an indicator of maintenance status, and a belt quality is determined from which the next maintenance time point is derived.

2. Method for monitoring the maintenance status of a belt conveyor that has a belt made of an elastomer material, comprising the following steps:
a) measurement of the ambient conditions of the belt in the area of the belt conveyor as variables that determine the wear on the belt, with at least one value selected from ambient temperature, air humidity and noise level being measured by means of at least one sensor arranged in the area of the belt conveyor, at prescribed first time intervals,
b) measurement of a Shore hardness of the belt at prescribed second time intervals, as an indicator of maintenance status,
c) storage of measurement data recorded in steps a) and b) in a database,
d) determination of a next maintenance time point on the basis of the maintenance status indicator,
with the measurement data being evaluated by an evaluation program running on a static or mobile terminal of the device, wherein a functional relationship between the values recorded in a) by the at least one sensor and the Shore hardness measured in b) is established as an indicator of maintenance status, and a belt quality is determined from which the next maintenance time point is derived.

3. Method according to claim 2, **characterised in that** the Shore hardness is determined manually when the belt conveyor is at a standstill.

4. Method according to claim 2, **characterised in that** the Shore hardness is determined automatically when the belt conveyor is at a standstill, or by means of a measurement device that can be moved along with the belt or a drive drum or deflection drum whilst the belt conveyor is in operation.

5. Method according to one of the claims 2 to 4, **characterised in that** in step a), acceleration data for the belt conveyor are additionally recorded by an acceleration sensor.

6. Method according to one of the claims 2 to 5, **characterised in that** in step a), vibration data for the belt conveyor are additionally recorded by a vibration sensor.

7. Method according to one of the claims 2 to 6, **characterised in that** in step a), run-time data are additionally recorded for the belt conveyor and/or the belt.

8. Method according to one of the claims 2 to 7, **characterised in that** in step a), photographic or video data for the belt and/or the belt conveyor are additionally recorded by a camera.

9. Method according to one of the claims 2 to 8, **characterised in that** in step b), the Shore A, C, AO and/or AM hardness of the belt is recorded.

10. Method according to one of the claims 2 to 9, **characterised in that** in step c), the measurement data are stored in a local memory which is arranged in the area of the belt conveyor, and which can comprise the database.

11. Method according to claim 10, **characterised in that** in step c), the measurement data are stored in the memory manually or automatically.

12. Method according to one of the claims 2 to 9, **characterised in that** in step c), the measurement data are stored by means of wireless communication in a memory which is located remotely from the belt conveyor, and which can comprise the database.

13. Method according to one of the claims 2 to 12, **characterised in that** in step d), the measurement data are displayed on the terminal.

14. Method according to one of the claims 2 to 13, **characterised in that** installed on the terminal is an application that comprises the evaluation program.

## Revendications

1. Un dispositif de surveillance du statut d'entretien d'une bande transporteuse qui se compose d'une bande en matériau élastomère, avec au moins un capteur implanté dans la zone occupée par une bande transporteuse et conçu pour enregistrer au moins l'une des valeurs suivantes : la température ambiante, l'humidité de l'air et le niveau sonore, un dispositif de mesure de la dureté Shore de la bande, une banque de données conçue pour conserver les mesures enregistrées par le capteur et par le dispositif de mesure et un bloc de commande qui est raccordé ou peut se raccorder à au moins l'un des éléments suivants : un capteur, le dispositif de mesure et la banque de données et qui est programmé pour exécuter les opérations suivantes :
a) mesure des conditions ambiantes de la bande dans la zone qu'occupe la bande transporteuse en tant que variables qui déterminent l'usure de la bande, après sélection d'au moins l'une des valeurs suivantes : la température ambiante, l'humidité de l'air et le niveau sonore, en fonction des mesures effectuées par au moins un capteur implanté dans la zone occupée par la bande transporteuse, à des intervalles programmés dans le temps,
b) mesure d'une dureté Shore de la bande à des intervalles programmés de temps et cette dureté Shore sert d'indicateur du statut d'entretien,
c) conservation dans une banque de données des données de mesure enregistrées lors des opérations a) et b),
d) détermination de la date du prochain entretien en se basant sur les données fournies par l'indicateur du statut d'entretien,
les données de ces mesures sont alors évaluées par un programme d'évaluation qui utilise un terminal statique ou mobile du dispositif, et un rapport fonctionnel entre les valeurs enregistrées lors des opérations a) par au moins un capteur et la dureté Shore mesurée lors des opérations b) est déterminé pour indiquer le statut d'entretien, ce qui permet de déterminer la qualité de la bande et de dériver le point dans le temps de réalisation du prochain entretien.

2. Un procédé de surveillance du statut d'entretien d'une bande transporteuse qui se compose d'une bande en matériau élastomère, et ce procédé se compose des opérations suivantes :
a) mesure des conditions ambiantes de la bande dans la zone qu'occupe la bande transporteuse en tant que variables qui déterminent l'usure de la bande, après sélection d'au moins l'une des valeurs suivantes :la tem0pérature ambiante, l'humidité de l'air et le niveau sonore, en fonction des mesures effectuées par au moins un capteur implanté dans la zone occupée par la bande transporteuse, à des intervalles programmés dans le temps,
b) mesure d'une dureté Shore de la bande à des intervalles programmés de temps et cette mesure sert d'indicateur du statut d'entretien,
c) conservation dans une banque de données des données de mesure enregistrées lors des opérations a) et b),
d) détermination de la date du prochain entretien en se basant sur les données fournies par l'indicateur du statut d'entretien,
les données de ces mesures sont alors évaluées par un programme d'évaluation qui utilise un terminal statique ou mobile du dispositif, et un rapport fonctionnel entre les valeurs enregistrées lors des opérations a) par au moins un capteur et la dureté Shore mesurée lors des opérations b) est déterminé pour indiquer le statut d'entretien, ce qui permet de déterminer la qualité de la bande et de dériver le point dans le temps de réalisation du prochain entretien.

3. Le procédé que décrit la revendication 2 et qui se **caractérise par le fait que** la dureté Shore est déterminée manuellement lorsque la bande transporteuse est à l'arrêt.

4. Le procédé que décrit la revendication 2 et qui se **caractérise par le fait que** la dureté Shore est déterminée automatiquement lorsque la bande transporteuse est à l'arrêt ou en faisant appel à un dispositif de mesure qui peut se déplacer le long de cette bande ou un tambour de transmission ou un tambour de déviation pendant le fonctionnement de la bande transporteuse.

5. Le procédé que décrit l'une ou l'autre des revendications 2 à 4, qui se **caractérise par le fait que**, lors des opérations a), les données d'accélération de la bande transporteuse sont en outre enregistrées par un capteur d'accélération.

6. Le procédé que décrit l'une ou l'autre des revendications 2 à 5, qui se **caractérise par le fait que**, lors des opérations a), les données de vibrations de la bande transporteuse sont en outre enregistrées par un capteur de vibrations.

7. Le procédé que décrit l'une ou l'autre des revendications 2 à 6, qui se **caractérise par le fait que**, lors des opérations a), les données de durée de fonctionnement de la bande transporteuse sont en outre enregistrées pour la bande transporteuse ou son tablier.

8. Le procédé que décrit l'une ou l'autre des revendications 2 à 7, qui se **caractérise par le fait que**, lors des opérations a), des données photographiques ou vidéo pour la bande transporteuse ou son tablier sont en outre enregistrées par une caméra.

9. Le procédé que décrit l'une ou l'autre des revendications 2 à 8, qui se **caractérise par le fait que**, lors des opérations b), la dureté Shore A, C, AO et/ou AM de la bande est enregistrée.

10. Le procédé que décrit l'une ou l'autre des revendications 2 à 9, qui se **caractérise par le fait que**, lors des opérations c), les données de mesure sont conservées dans une mémoire locale qui est implantée dans la zone occupée par la bande transporteuse et qui peut aussi contenir la banque de données.

11. Le procédé que décrit la revendication 10, qui se **caractérise par le fait que**, lors des opérations c), les données de mesure sont conservées manuellement ou automatiquement dans la mémoire.

12. Le procédé que décrit l'une ou l'autre des revendications 2 à 9, qui se **caractérise par le fait que**, lors des opérations c), les données de mesure sont conservées, par le biais de moyens de communication sans fil, dans une mémoire qui est implantée à l'écart de la zone occupée par la bande transporteuse et qui peut aussi contenir la banque de données.

13. Le procédé que décrit l'une ou l'autre des revendications 2 à 12, qui se **caractérise par le fait que**, lors des opérations d), les données de mesure viennent s'afficher sur le terminal.

14. Le procédé que décrit l'une ou l'autre des revendications 2 à 13, qui se **caractérise par le fait qu'**une application contenant le programme d'évaluation est installée sur le terminal.
